# EUROPEAN PATENT APPLICATION

(11) **EP 3 661 279 A1**
(43) Date of publication of application: **03.06.2020**
(21) Application number: 18837202.3
(22) Date of filing: 20.07.2018
(51) Int. Cl.: H04W 72/02, H04W 74/08

(54) **METHOD AND DEVICE BY WHICH TERMINAL SELECTS RESOURCE AND TRANSMITS SIGNAL IN WIRELESS COMMUNICATION SYSTEM**

(30) Priority: 28.07.2017 US 201762538057 P
(71) Applicant: LG Electronics Inc., Seoul 07336 (KR)
(72) Inventor: CHAE, Hyukjin, Seoul 06772 (KR); SEO, Hanbyul, Seoul 06772 (KR)
(74) Representative: Plasseraud IP
(86) International application number: PCT/KR2018/008242
(87) International publication number: WO 2019/022443

(57) **Abstract**

Disclosed in one embodiment of the present invention is a method by which a terminal selects a resource and transmits a signal in a wireless communication system, the method comprising the steps of: performing sensing during a preset time; selecting a resource through which a signal is to be transmitted on the basis of the sensing result; and transmitting the signal to another terminal through the selected resource, wherein when selecting the resource, the terminal preferentially excludes a pivot resource from resources for which sensing is performed, and the pivot resource is a resource which has a periodically repeated position and is irrelevant to a size or a period change of a transmission packet.

## Description

### Technical Field

The present disclosure relates to a wireless communication system, and more particularly, to a method and apparatus for selecting resources and transmitting a signal by a user equipment (UE), when a transmission packet has a variable size in vehicle-to-everything (V2X).

### Background Art

Wireless communication systems have been widely deployed to provide various types of communication services such as voice or data. In general, a wireless communication system is a multiple access system that supports communication of multiple users by sharing available system resources (a bandwidth, transmission power, etc.) among them. For example, multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi-carrier frequency division multiple access (MC-FDMA) system.

Device-to-device (D2D) communication is a communication scheme in which a direct link is established between user equipments (UEs) and the UEs exchange voice and data directly without intervention of an evolved Node B (eNB). D2D communication may cover UE-to-UE communication and peer-to-peer communication. In addition, D2D communication may be applied to machine-to-machine (M2M) communication and machine type communication (MTC).

D2D communication is under consideration as a solution to the overhead of an eNB caused by rapidly increasing data traffic. For example, since devices exchange data directly with each other without intervention of an eNB by D2D communication, compared to legacy wireless communication, network overhead may be reduced. Further, it is expected that the introduction of D2D communication will reduce procedures of an eNB, reduce the power consumption of devices participating in D2D communication, increase data transmission rates, increase the accommodation capability of a network, distribute load, and extend cell coverage.

At present, vehicle-to-everything (V2X) communication in conjunction with D2D communication is under consideration. In concept, V2X communication covers vehicle-to-vehicle (V2V) communication, vehicle-to-pedestrian (V2P) communication for communication between a vehicle and a different kind of terminal, and vehicle-to-infrastructure (V2I) communication for communication between a vehicle and a roadside unit (RSU).

### Disclosure

### Technical Problem

An aspect of the present disclosure is to provide a method and apparatus for selecting resources and transmitting a signal by a user equipment (UE), when a transmission packet has a variable size in vehicle-to-everything (V2X).

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

According to an embodiment of the present disclosure, a method of selecting resources and transmitting a signal in the selected resources by a user equipment (UE) in a wireless communication system includes performing sensing for a predetermined time, selecting resources for signal transmission based on a result of the sensing, and transmitting a signal to another UE in the selected resources. When the UE selects the resources, the UE excludes pivot resources with a highest priority from resources for which the sensing has been performed, and the pivot resources are located at periodically repeated positions, and are not related to a change in a size or periodicity of a transmission packet.

According to an embodiment of the present disclosure, a UE for selecting resources and transmitting a signal in the selected resources in a wireless communication system includes a transceiver and a processor. The processor is configured to perform sensing for a predetermined time, select resources for signal transmission based on a result of the sensing, and transmit a signal to another UE in the selected resources. When the UE selects the resources, the UE excludes pivot resources with a highest priority from resources for which the sensing has been performed, and the pivot resources are located at periodically repeated positions, and are not related to a change in a size or periodicity of a transmission packet.

A specific resource area contiguous to the pivot resources on a time or frequency axis may be excluded with a second highest priority from the resources for which the sensing has been performed.

The resources for signal transmission may be selected from among the resources for which the sensing has been selected, excluding resources having a sensing result equal to or larger than a predetermined threshold, and a lowest threshold is set for the pivot resources.

The pivot resources may indicate a position of resources to be used within a predetermined time period.

The pivot resources may be extended to a specific resource area contiguous to the pivot resources on a time or frequency axis, based on a size of a packet transmitted in the pivot resources being larger than an allowed packet size for transmission in the pivot resources.

At least one of the size or periodicity of the packet may be changed according to a type of a vehicle-to-everything (V2X) service.

A V2X control signal may be transmitted in the pivot resources.

A transmission time interval (TTI) used in the pivot resource area may be shorter than a TTI used for the UE to transmit data.

### Advantageous Effects

According to the present disclosure, when a message has a different transmission periodicity, size, and latency requirement according to a service or an application, a user equipment (UE) may effectively select and reselect resources in device-to-device (D2D) communication.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### Brief Description of the Drawings

The accompanying drawings, which are included to provide a further understanding of the present disclosure and are incorporated in and constitute a part of this application, illustrate embodiments of the present disclosure and together with the description serve to explain the principle of the present disclosure. In the drawings:
FIG. 1 is a view illustrating the structure of a radio frame;
FIG. 2 is a view illustrating a resource grid during the duration of one downlink slot;
FIG. 3 is a view illustrating the structure of a downlink subframe;
FIG. 4 is a view illustrating the structure of an uplink subframe;
FIG. 5 is a view illustrating the configuration of a wireless communication system having multiple antennas;
FIG. 6 is a view illustrating a subframe carrying a device-to-device (D2D) synchronization signal;
FIG. 7 is a view illustrating relay of a D2D signal;
FIG. 8 is a view illustrating an exemplary D2D resource pool for D2D communication;
FIG. 9 is a view referred to for describing transmission modes and scheduling schemes for vehicle-to-everything (V2X);

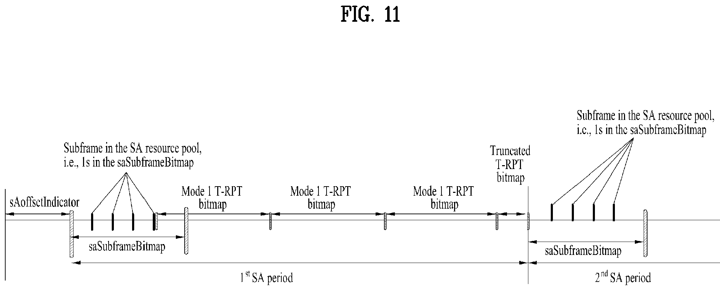

FIG. 10 is a view illustrating a method of selecting resources in V2X; FIG. 11 is a view referred to for describing a scheduling assignment (SA) and data transmission in D2D;
FIG. 12 is a view referred to for describing an SA and data transmission in V2X;
FIGS. 13 and 14 is a view illustrating a new radio access technology (NRAT) frame structure;
FIG. 15 is a view illustrating a method of selecting a transmission time interval (TTI) resource according to an embodiment of the present disclosure; and
FIG. 16 is a block diagram illustrating a transmitting device and a receiving device.

### Best Mode

The embodiments of the present disclosure described hereinbelow are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or features of any one embodiment may be included in another embodiment and may be replaced with corresponding constructions or features of another embodiment.

In the embodiments of the present disclosure, a description is made, centering on a data transmission and reception relationship between a base station (BS) and a user equipment (UE). The BS is a terminal node of a network, which communicates directly with a UE. In some cases, a specific operation described as performed by the BS may be performed by an upper node of the BS.

Namely, it is apparent that, in a network comprised of a plurality of network nodes including a BS, various operations performed for communication with a UE may be performed by the BS or network nodes other than the BS. The term 'BS' may be replaced with the term 'fixed station', 'Node B', 'evolved Node B (eNode B or eNB)', 'Access Point (AP)', etc. The term 'relay' may be replaced with the term 'relay node (RN)' or 'relay station (RS)'. The term 'terminal' may be replaced with the term 'UE', 'mobile station (MS)', 'mobile subscriber station (MSS)', 'subscriber station (SS)', etc.

The term "cell", as used herein, may be applied to transmission and reception points such as a base station (eNB), a sector, a remote radio head (RRH), and a relay, and may also be extensively used by a specific transmission/reception point to distinguish between component carriers.

Specific terms used for the embodiments of the present disclosure are provided to help the understanding of the present disclosure. These specific terms may be replaced with other terms within the scope and spirit of the present disclosure.

In some cases, to prevent the concept of the present disclosure from being ambiguous, structures and apparatuses of the known art will be omitted, or will be shown in the form of a block diagram based on main functions of each structure and apparatus. Also, wherever possible, the same reference numbers will be used throughout the drawings and the specification to refer to the same or like parts.

The embodiments of the present disclosure can be supported by standard documents disclosed for at least one of wireless access systems, Institute of Electrical and Electronics Engineers (IEEE) 802, 3rd Generation Partnership Project (3GPP), 3GPP long term evolution (3GPP LTE), LTE-advanced (LTE-A), and 3GPP2. Steps or parts that are not described to clarify the technical features of the present disclosure can be supported by those documents. Further, all terms as set forth herein can be explained by the standard documents.

Techniques described herein can be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. WiMAX can be described by the IEEE 802.16e standard (wireless metropolitan area network (WirelessMAN)-OFDMA Reference System) and the IEEE 802.16m standard (WirelessMAN-OFDMA Advanced System). For clarity, this application focuses on the 3GPP LTE and LTE-A systems. However, the technical features of the present disclosure are not limited thereto.

### LTE/LTE-A Resource Structure/Channel

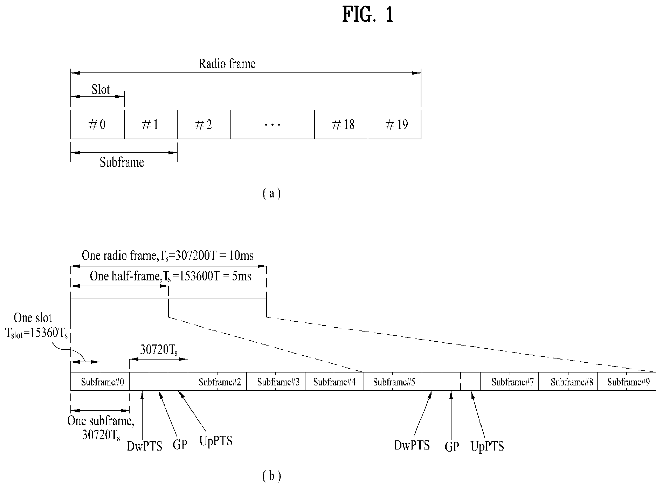

With reference to FIG. 1, the structure of a radio frame will be described below.

In a cellular orthogonal frequency division multiplexing (OFDM) wireless packet communication system, uplink and/or downlink data packets are transmitted in subframes. One subframe is defined as a predetermined time period including a plurality of OFDM symbols. The 3GPP LTE standard supports a type-1 radio frame structure applicable to frequency division duplex (FDD) and a type-2 radio frame structure applicable to time division duplex (TDD).

FIG. 1(a) illustrates the type-1 radio frame structure. A downlink radio frame is divided into 10 subframes. Each subframe is further divided into two slots in the time domain. A unit time during which one subframe is transmitted is defined as a transmission time interval (TTI). For example, one subframe may be 1ms in duration and one slot may be 0.5ms in duration. A slot includes a plurality of OFDM symbols in the time domain and a plurality of resource blocks (RBs) in the frequency domain. Because the 3GPP LTE system adopts OFDMA for downlink, an OFDM symbol represents one symbol period. An OFDM symbol may be referred to as an SC-FDMA symbol or symbol period. An RB is a resource allocation unit including a plurality of contiguous subcarriers in a slot.

The number of OFDM symbols in one slot may vary depending on a cyclic prefix (CP) configuration. There are two types of CPs: extended CP and normal CP. In the case of the normal CP, one slot includes 7 OFDM symbols. In the case of the extended CP, the length of one OFDM symbol is increased and thus the number of OFDM symbols in a slot is smaller than in the case of the normal CP. Thus when the extended CP is used, for example, 6 OFDM symbols may be included in one slot. If channel state gets poor, for example, during fast movement of a UE, the extended CP may be used to further decrease inter-symbol interference (ISI).

In the case of the normal CP, one subframe includes 14 OFDM symbols because one slot includes 7 OFDM symbols. The first two or three OFDM symbols of each subframe may be allocated to a physical downlink control channel (PDCCH) and the other OFDM symbols may be allocated to a physical downlink shared channel (PDSCH).

FIG. 1(b) illustrates the type-2 radio frame structure. A type-2 radio frame includes two half frames, each having 5 subframes, a downlink pilot time slot (DwPTS), a guard period (GP), and an uplink pilot time slot (UpPTS). Each subframe is divided into two slots. The DwPTS is used for initial cell search, synchronization, or channel estimation at a UE. The UpPTS is used for channel estimation and acquisition of uplink transmission synchronization to a UE at an eNB. The GP is a period between an uplink and a downlink, which eliminates uplink interference caused by multipath delay of a downlink signal. One subframe includes two slots irrespective of the type of a radio frame.

The above-described radio frame structures are purely exemplary and thus it is to be noted that the number of subframes in a radio frame, the number of slots in a subframe, or the number of symbols in a slot may vary.

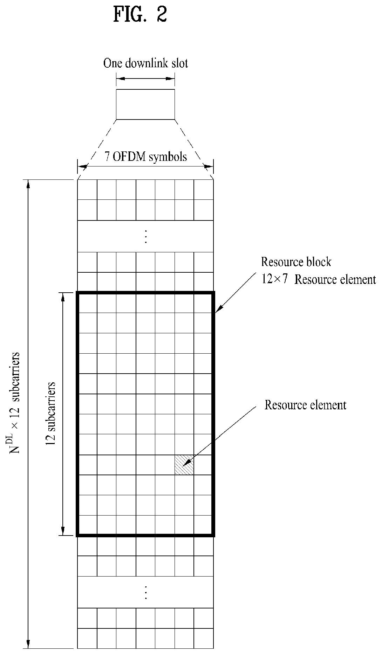

FIG. 2 illustrates the structure of a downlink resource grid for the duration of one downlink slot. A downlink slot includes 7 OFDM symbols in the time domain and an RB includes 12 subcarriers in the frequency domain, which does not limit the scope and spirit of the present disclosure. For example, a downlink slot may include 7 OFDM symbols in the case of the normal CP, whereas a downlink slot may include 6 OFDM symbols in the case of the extended CP. Each element of the resource grid is referred to as a resource element (RE). An RB includes 12x7 REs. The number of RBs in a downlink slot, NDL depends on a downlink transmission bandwidth. An uplink slot may have the same structure as a downlink slot.

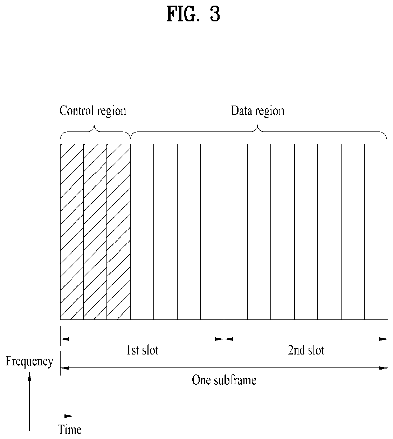

FIG. 3 illustrates the structure of a downlink subframe. Up to three OFDM symbols at the start of the first slot in a downlink subframe are used for a control region to which control channels are allocated and the other OFDM symbols of the downlink subframe are used for a data region to which a PDSCH is allocated. Downlink control channels used in the 3GPP LTE system include a physical control format indicator channel (PCFICH), a physical downlink control channel (PDCCH), and a physical hybrid automatic repeat request (HARQ) indicator channel (PHICH). The PCFICH is located in the first OFDM symbol of a subframe, carrying information about the number of OFDM symbols used for transmission of control channels in the subframe. The PHICH delivers an HARQ acknowledgment/negative acknowledgment (ACK/NACK) signal in response to an uplink transmission. Control information carried on the PDCCH is called downlink control information (DCI). The DCI transports uplink or downlink scheduling information, or uplink transmission power control commands for UE groups. The PDCCH delivers information about resource allocation and a transport format for a downlink shared channel (DL-SCH), resource allocation information about an uplink shared channel (UL-SCH), paging information of a paging channel (PCH), system information on the DL-SCH, information about resource allocation for a higher-layer control message such as a Random Access Response transmitted on the PDSCH, a set of transmission power control commands for individual UEs of a UE group, transmission power control information, voice over Internet protocol (VoIP) activation information, etc. A plurality of PDCCHs may be transmitted in the control region. A UE may monitor a plurality of PDCCHs. A PDCCH is formed by aggregating one or more consecutive control channel elements (CCEs). A CCE is a logical allocation unit used to provide a PDCCH at a coding rate based on the state of a radio channel. A CCE includes a plurality of RE groups. The format of a PDCCH and the number of available bits for the PDCCH are determined according to the correlation between the number of CCEs and a coding rate provided by the CCEs. An eNB determines the PDCCH format according to DCI transmitted to a UE and adds a cyclic redundancy check (CRC) to control information. The CRC is masked by an identifier (ID) known as a radio network temporary identifier (RNTI) according to the owner or usage of the PDCCH. If the PDCCH is directed to a specific UE, its CRC may be masked by a cell-RNTI (C-RNTI) of the UE. If the PDCCH is for a paging message, the CRC of the PDCCH may be masked by a paging indicator Identifier (P-RNTI). If the PDCCH carries system information, particularly, a system information block (SIB), its CRC may be masked by a system information ID and a system information RNTI (SI-RNTI). To indicate that the PDCCH carries a random access response in response to a random access preamble transmitted by a UE, its CRC may be masked by a random access-RNTI (RA-RNTI).

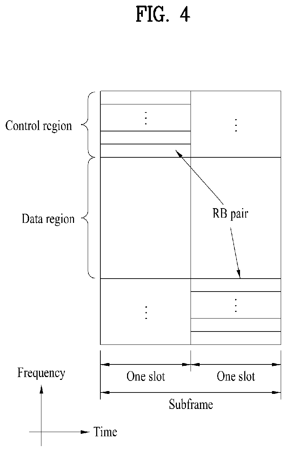

FIG. 4 illustrates the structure of an uplink subframe. An uplink subframe may be divided into a control region and a data region in the frequency domain. A physical uplink control channel (PUCCH) carrying uplink control information is allocated to the control region and a physical uplink shared channel (PUSCH) carrying user data is allocated to the data region. To maintain the property of a single carrier, a UE does not transmit a PUSCH and a PUCCH simultaneously. A PUCCH for a UE is allocated to an RB pair in a subframe. The RBs of the RB pair occupy different subcarriers in two slots. Thus it is said that the RB pair allocated to the PUCCH is frequency-hopped over a slot boundary.

### Reference Signal (RS)

In a wireless communication system, a packet is transmitted on a radio channel. In view of the nature of the radio channel, the packet may be distorted during the transmission. To receive the signal successfully, a receiver should compensate for the distortion of the received signal using channel information. Generally, to enable the receiver to acquire the channel information, a transmitter transmits a signal known to both the transmitter and the receiver and the receiver acquires knowledge of channel information based on the distortion of the signal received on the radio channel. This signal is called a pilot signal or an RS.

In the case of data transmission and reception through multiple antennas, knowledge of channel states between transmission (Tx) antennas and reception (Rx) antennas is required for successful signal reception. Accordingly, an RS should be transmitted through each Tx antenna.

RSs may be divided into downlink RSs and uplink RSs. In the current LTE system, the uplink RSs include:

i) Demodulation-reference signal (DM-RS) used for channel estimation for coherent demodulation of information delivered on a PUSCH and a PUCCH; and

ii) Sounding reference signal (SRS) used for an eNB or a network to measure the quality of an uplink channel in a different frequency.

The downlink RSs are categorized into:
i) Cell-specific reference signal (CRS) shared among all UEs of a cell;
ii) UE-specific RS dedicated to a specific UE;
iii) DM-RS used for coherent demodulation of a PDSCH, when the PDSCH is transmitted;
iv) Channel state information-reference signal (CSI-RS) carrying CSI, when downlink DM-RSs are transmitted;
v) Multimedia broadcast single frequency network (MBSFN) RS used for coherent demodulation of a signal transmitted in MBSFN mode; and
vi) Positioning RS used to estimate geographical position information about a UE.

RSs may also be divided into two types according to their purposes: RS for channel information acquisition and RS for data demodulation. Since its purpose lies in that a UE acquires downlink channel information, the former should be transmitted in a broad band and received even by a UE that does not receive downlink data in a specific subframe. This RS is also used in a situation like handover. The latter is an RS that an eNB transmits along with downlink data in specific resources. A UE can demodulate the data by measuring a channel using the RS. This RS should be transmitted in a data transmission area.

### Modeling of MIMO System

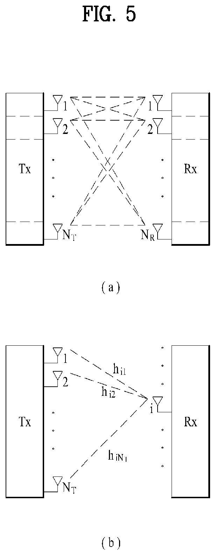

FIG. 5 is a diagram illustrating a configuration of a wireless communication system having multiple antennas.

As shown in FIG. 5(a), if the number of Tx antennas is increased to N_{T} and the number of Rx antennas is increased to N_{R}, a theoretical channel transmission capacity is increased in proportion to the number of antennas, unlike the case where a plurality of antennas is used in only a transmitter or a receiver. Accordingly, it is possible to improve a transfer rate and to remarkably improve frequency efficiency. As the channel transmission capacity is increased, the transfer rate may be theoretically increased by a product of a maximum transfer rate Ro upon utilization of a single antenna and a rate increase ratio Ri. ${R}_{i} = min \left({N}_{T}, {N}_{R}\right)$

For instance, in an MIMO communication system, which uses four Tx antennas and four Rx antennas, a transmission rate four times higher than that of a single antenna system can be obtained. Since this theoretical capacity increase of the MIMO system has been proved in the middle of 1990s, many ongoing efforts are made to various techniques to substantially improve a data transmission rate. In addition, these techniques are already adopted in part as standards for various wireless communications such as 3G mobile communication, next generation wireless LAN, and the like.

The trends for the MIMO relevant studies are explained as follows. First of all, many ongoing efforts are made in various aspects to develop and research information theory study relevant to MIMO communication capacity calculations and the like in various channel configurations and multiple access environments, radio channel measurement and model derivation study for MIMO systems, spatiotemporal signal processing technique study for transmission reliability enhancement and transmission rate improvement and the like.

In order to explain a communicating method in an MIMO system in detail, mathematical modeling can be represented as follows. It is assumed that there are N_{T} Tx antennas and N_{R} Rx antennas.

Regarding a transmitted signal, if there are N_{T} Tx antennas, the maximum number of pieces of information that can be transmitted is N_{T}. Hence, the transmission information can be represented as shown in Equation 2. $s = {⌊ {s}_{1} , {s}_{2} , ⋯ , {s}_{{N}_{T}} ⌋}^{T}$

Meanwhile, transmit powers can be set different from each other for individual pieces of transmission information ***S*₁*,S*₂,**···,***S_{N_{T}}*,** respectively. If the transmit powers are set to *P*₁,*P*₂,···,*P_{N_{T}}*, respectively, the transmission information with adjusted transmit powers can be represented as Equation 3. $\hat{s} = {\left[{\hat{s}}_{1}, {\hat{s}}_{2}, ⋯, {\hat{s}}_{{N}_{T}}\right]}^{T} = {\left[{P}_{1}{s}_{1},{P}_{2}{s}_{2},⋯,{P}_{{N}_{T}}{s}_{{N}_{T}}\right]}^{T}$

In addition, *Ŝ* can be represented as Equation 4 using diagonal matrix ***P*** of the transmission power. $\hat{s} = \left[\begin{matrix}{P}_{1} & & & 0 \\ & {P}_{2} & & \\ & & ⋱ & \\ 0 & & & {P}_{{N}_{T}}\end{matrix}\right] \left[\begin{matrix}{s}_{1} \\ {s}_{2} \\ ⋮ \\ {s}_{{N}_{T}}\end{matrix}\right] = Ps$

Assuming a case of configuring N_{T} transmitted signals *x*₁,*x*₂,···,*x_{NT}*, which are actually transmitted, by applying weight matrix **W** to the information vector ***Ŝ*** having the adjusted transmit powers, the weight matrix **W** serves to appropriately distribute the transmission information to each antenna according to a transport channel state. *x*₁,*x*₂,···,*x_{N_{T}}* can be expressed by using the vector **X** as follows. $x = \left[\begin{matrix}{x}_{1} \\ {x}_{2} \\ ⋮ \\ {x}_{i} \\ ⋮ \\ {x}_{{N}_{T}}\end{matrix}\right] = \left[\begin{matrix}{w}_{11} & {w}_{12} & ⋯ & {w}_{1 {N}_{T}} \\ {w}_{21} & {w}_{22} & ⋯ & {w}_{2 {N}_{T}} \\ ⋮ & & ⋱ & \\ {w}_{i 1} & {w}_{i 2} & ⋯ & {w}_{{iN}_{T}} \\ ⋮ & & ⋱ & \\ {w}_{{N}_{T} 1} & {w}_{{N}_{T} 2} & ⋯ & {w}_{{N}_{T} {N}_{T}}\end{matrix}\right] \left[\begin{matrix}{\hat{s}}_{1} \\ {\hat{s}}_{2} \\ ⋮ \\ {\hat{s}}_{j} \\ ⋮ \\ {\hat{s}}_{{N}_{T}}\end{matrix}\right] = W \hat{s} = WPs$

In Equation 5, *Wᵢⱼ* denotes a weight between an i^{th} Tx antenna and j^{th} information. **W** is also called a precoding matrix.

If the N_{R} Rx antennas are present, respective received signals *y*₁,*y*₂,···,*y_{N_{R}}* of the antennas can be expressed as follows. $y = {\left[{y}_{1}, {y}_{2}, ⋯, {y}_{{N}_{R}}\right]}^{T}$

If channels are modeled in the MIMO wireless communication system, the channels may be distinguished according to Tx/Rx antenna indexes. A channel from the Tx antenna j to the Rx antenna i is denoted by ***h**ᵢⱼ.* In ***h**ᵢⱼ,* it is noted that the indexes of the Rx antennas precede the indexes of the Tx antennas in view of the order of indexes.

FIG. 5(b) is a diagram illustrating channels from the N_{T} Tx antennas to the Rx antenna i. The channels may be combined and expressed in the form of a vector and a matrix. In FIG. 5(b), the channels from the N_{T} Tx antennas to the Rx antenna i can be expressed as follows. ${h}_{i}^{T} = \left[{h}_{i 1}, {h}_{i 2}, ⋯, {h}_{{iN}_{T}}\right]$

Accordingly, all channels from the N_{T} Tx antennas to the N_{R} Rx antennas can be expressed as follows. $H = \left[\begin{matrix}{h}_{1}^{T} \\ {h}_{2}^{T} \\ ⋮ \\ {h}_{i}^{T} \\ ⋮ \\ {h}_{{N}_{R}}^{T}\end{matrix}\right] = \left[\begin{matrix}{h}_{11} & {h}_{12} & ⋯ & {h}_{1 {N}_{T}} \\ {h}_{21} & {h}_{22} & ⋯ & {h}_{2 {N}_{T}} \\ ⋮ & & ⋱ & \\ {h}_{i 1} & {h}_{i 2} & ⋯ & {h}_{{iN}_{T}} \\ ⋮ & & ⋱ & \\ {h}_{{N}_{R} 1} & {h}_{{N}_{R} 2} & ⋯ & {h}_{{N}_{R} {N}_{T}}\end{matrix}\right]$

An AWGN (Additive White Gaussian Noise) is added to the actual channels after a channel matrix **H.** The AWGN ***n***₁,***n***₂,···,***n**_{N_{R}}* respectively added to the N_{R} Rx antennas can be expressed as follows. $n = {\left[{n}_{1}, {n}_{2}, ⋯, {n}_{{N}_{R}}\right]}^{T}$

Through the above-described mathematical modeling, the received signals can be expressed as follows. $y = \left[\begin{matrix}{y}_{1} \\ {y}_{2} \\ ⋮ \\ {y}_{i} \\ ⋮ \\ {y}_{{N}_{R}}\end{matrix}\right] = \left[\begin{matrix}{h}_{11} & {h}_{11} & ⋯ & {h}_{1 {N}_{T}} \\ {h}_{21} & {h}_{22} & ⋯ & {h}_{2 {N}_{T}} \\ ⋮ & & ⋱ & \\ {h}_{i 1} & {h}_{i 2} & ⋯ & {h}_{{iN}_{T}} \\ ⋮ & & ⋱ & \\ {h}_{{N}_{R} 1} & {h}_{{N}_{R} 2} & ⋯ & {h}_{{N}_{R} {N}_{T}}\end{matrix}\right] \left[\begin{matrix}{x}_{1} \\ {x}_{2} \\ ⋮ \\ {x}_{j} \\ ⋮ \\ {x}_{{N}_{T}}\end{matrix}\right] + \left[\begin{matrix}{n}_{1} \\ {n}_{2} \\ ⋮ \\ {n}_{i} \\ ⋮ \\ {n}_{{N}_{R}}\end{matrix}\right] = Hx + n$

Meanwhile, the number of rows and columns of the channel matrix **H** indicating the channel state is determined by the number of Tx and Rx antennas. The number of rows of the channel matrix **H** is equal to the number N_{R} of Rx antennas and the number of columns thereof is equal to the number N_{T} of Tx antennas. That is, the channel matrix **H** is an N_{R×}N_{T} matrix.

The rank of the matrix is defined by the smaller of the number of rows and the number of columns, which are independent from each other. Accordingly, the rank of the matrix is not greater than the number of rows or columns. The rank *rank*(**H**) of the channel matrix **H** is restricted as follows. $rank \left(H\right) \leq min \left({N}_{T}, {N}_{R}\right)$

Additionally, the rank of a matrix can also be defined as the number of non-zero Eigen values when the matrix is Eigen-value-decomposed. Similarly, the rank of a matrix can be defined as the number of non-zero singular values when the matrix is singular-value-decomposed. Accordingly, the physical meaning of the rank of a channel matrix can be the maximum number of channels through which different pieces of information can be transmitted.

In the description of the present document, 'rank' for MIMO transmission indicates the number of paths capable of sending signals independently on specific time and frequency resources and 'number of layers' indicates the number of signal streams transmitted through the respective paths. Generally, since a transmitting end transmits the number of layers corresponding to the rank number, one rank has the same meaning of the layer number unless mentioned specially.

### Synchronization Acquisition of D2D UE

Now, a description will be given of synchronization acquisition between UEs in D2D communication based on the foregoing description in the context of the legacy LTE/LTE-A system. In an OFDM system, if time/frequency synchronization is not acquired, the resulting inter-cell interference (ICI) may make it impossible to multiplex different UEs in an OFDM signal. If each individual D2D UE acquires synchronization by transmitting and receiving a synchronization signal directly, this is inefficient. In a distributed node system such as a D2D communication system, therefore, a specific node may transmit a representative synchronization signal and the other UEs may acquire synchronization using the representative synchronization signal. In other words, some nodes (which may be an eNB, a UE, and a synchronization reference node (SRN, also referred to as a synchronization source)) may transmit a D2D synchronization signal (D2DSS) and the remaining UEs may transmit and receive signals in synchronization with the D2DSS.

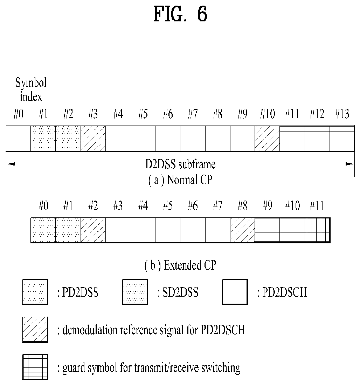

D2DSSs may include a primary D2DSS (PD2DSS) or a primary sidelink synchronization signal (PSSS) and a secondary D2DSS (SD2DSS) or a secondary sidelink synchronization signal (SSSS). The PD2DSS may be configured to have a similar/modified/repeated structure of a Zadoff-Chu sequence of a predetermined length or a primary synchronization signal (PSS). Unlike a DL PSS, the PD2DSS may use a different Zadoff-Chu root index (e.g., 26, 37). And, the SD2DSS may be configured to have a similar/modified/repeated structure of an M-sequence or a secondary synchronization signal (SSS). If UEs synchronize their timing with an eNB, the eNB serves as an SRN and the D2DSS is a PSS/SSS. Unlike PSS/SSS of DL, the PD2DSS/SD2DSS follows UL subcarrier mapping scheme. FIG. 6 shows a subframe in which a D2D synchronization signal is transmitted. A physical D2D synchronization channel (PD2DSCH) may be a (broadcast) channel carrying basic (system) information that a UE should first obtain before D2D signal transmission and reception (e.g., D2DSS-related information, a duplex mode (DM), a TDD UL/DL configuration, a resource pool-related information, the type of an application related to the D2DSS, etc.). The PD2DSCH may be transmitted in the same subframe as the D2DSS or in a subframe subsequent to the frame carrying the D2DSS. A DMRS can be used to demodulate the PD2DSCH.

The SRN may be a node that transmits a D2DSS and a PD2DSCH. The D2DSS may be a specific sequence and the PD2DSCH may be a sequence representing specific information or a codeword produced by predetermined channel coding. The SRN may be an eNB or a specific D2D UE. In the case of partial network coverage or out of network coverage, the SRN may be a UE.

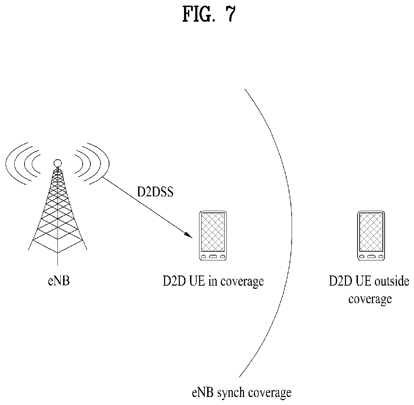

In a situation illustrated in FIG. 7, a D2DSS may be relayed for D2D communication with an out-of-coverage UE. The D2DSS may be relayed over multiple hops. The following description is given with the appreciation that relay of an SS covers transmission of a D2DSS in a separate format according to a SS reception time as well as direct amplify-and-forward (AF)-relay of an SS transmitted by an eNB. As the D2DSS is relayed, an in-coverage UE may communicate directly with an out-of-coverage UE.

### D2D Resource Pool

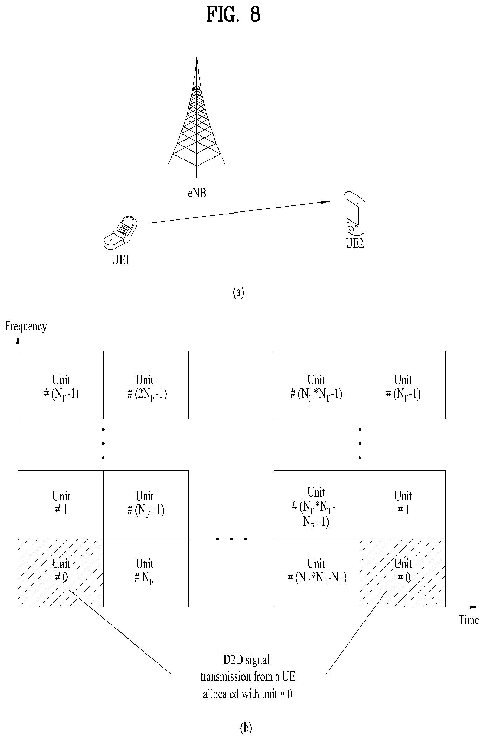

FIG. 8 shows an example of a first UE (UE1), a second UE (UE2) and a resource pool used by UE1 and UE2 performing D2D communication. In FIG. 8(a), a UE corresponds to a terminal or such a network device as an eNB transmitting and receiving a signal according to a D2D communication scheme. A UE selects a resource unit corresponding to a specific resource from a resource pool corresponding to a set of resources and the UE transmits a D2D signal using the selected resource unit. UE2 corresponding to a receiving UE receives a configuration of a resource pool in which UE1 is able to transmit a signal and detects a signal of UE1 in the resource pool. In this case, if UE1 is located at the inside of coverage of an eNB, the eNB can inform UE1 of the resource pool. If UE1 is located at the outside of coverage of the eNB, the resource pool can be informed by a different UE or can be determined by a predetermined resource. In general, a resource pool includes a plurality of resource units. A UE selects one or more resource units from among a plurality of the resource units and may be able to use the selected resource unit(s) for D2D signal transmission. FIG. 8(b) shows an example of configuring a resource unit. Referring to FIG. 8(b), the entire frequency resources are divided into the Np number of resource units and the entire time resources are divided into the N_{T} number of resource units. In particular, it is able to define N_{F}^{∗}N_{T} number of resource units in total. In particular, a resource pool can be repeated with a period of N_{T} subframes. Specifically, as shown in FIG. 8, one resource unit may periodically and repeatedly appear. Or, an index of a physical resource unit to which a logical resource unit is mapped may change with a predetermined pattern according to time to obtain a diversity gain in time domain and/or frequency domain. In this resource unit structure, a resource pool may correspond to a set of resource units capable of being used by a UE intending to transmit a D2D signal.

A resource pool can be classified into various types. First of all, the resource pool can be classified according to contents of a D2D signal transmitted via each resource pool. For example, the contents of the D2D signal can be classified into various signals and a separate resource pool can be configured according to each of the contents. The contents of the D2D signal may include a scheduling assignment (SA or physical sidelink control channel (PSCCH)), a D2D data channel, and a discovery channel. The SA may correspond to a signal including information on a resource position of a D2D data channel, information on a modulation and coding scheme (MCS) necessary for modulating and demodulating a data channel, information on a MIMO transmission scheme, information on a timing advance (TA), and the like. The SA signal can be transmitted on an identical resource unit in a manner of being multiplexed with D2D data. In this case, an SA resource pool may correspond to a pool of resources that an SA and D2D data are transmitted in a manner of being multiplexed. The SA signal can also be referred to as a D2D control channel or a physical sidelink control channel (PSCCH). The D2D data channel (or, physical sidelink shared channel (PSSCH)) corresponds to a resource pool used by a transmitting UE to transmit user data. If an SA and a D2D data are transmitted in a manner of being multiplexed in an identical resource unit, D2D data channel except SA information can be transmitted only in a resource pool for the D2D data channel. In other word, REs, which are used to transmit SA information in a specific resource unit of an SA resource pool, can also be used for transmitting D2D data in a D2D data channel resource pool. The discovery channel may correspond to a resource pool for a message that enables a neighboring UE to discover transmitting UE transmitting information such as ID of the UE, and the like.

Despite the same contents, D2D signals may use different resource pools according to the transmission and reception properties of the D2D signals. For example, despite the same D2D data channels or the same discovery messages, they may be distinguished by different resource pools according to transmission timing determination schemes for the D2D signals (e.g., whether a D2D signal is transmitted at the reception time of a synchronization reference signal or at a time resulting from applying a predetermined TA to the reception time of the synchronization reference signal), resource allocation schemes for the D2D signals (e.g., whether an eNB configures the transmission resources of an individual signal for an individual transmitting UE or the individual transmitting UE autonomously selects the transmission resources of an individual signal in a pool), the signal formats of the D2D signals (e.g., the number of symbols occupied by each D2D signal in one subframe or the number of subframes used for transmission of a D2D signal), signal strengths from the eNB, the transmission power of a D2D UE, and so on. In D2D communication, a mode in which an eNB directly indicates transmission resources to a D2D transmitting UE is referred to as sidelink transmission mode 1, and a mode in which a transmission resource area is preconfigured or the eNB configures a transmission resource area and the UE directly selects transmission resources is referred to as sidelink transmission mode 2. In D2D discovery, a mode in which an eNB directly indicates resources is referred to as Type 2, and a mode in which a UE selects transmission resources directly from a preconfigured resource area or a resource area indicated by the eNB is referred to as Type 1.

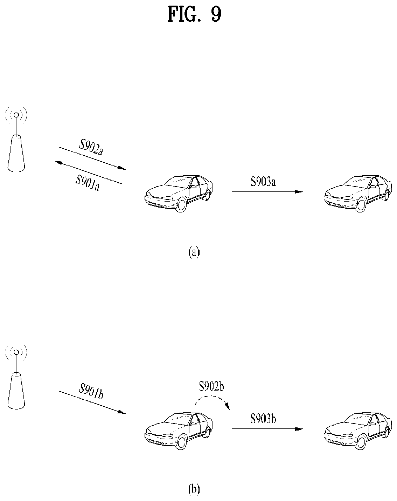

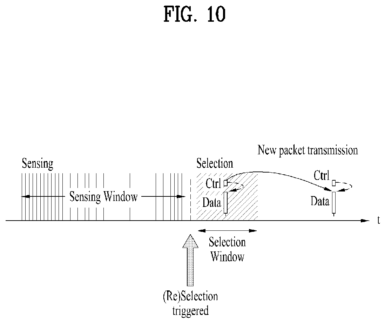

In V2X, sidelink transmission mode 3 based on centralized scheduling and sidelink transmission mode 4 based on distributed scheduling are available. FIG. 9 illustrates scheduling schemes according to these two transmission modes. Referring to FIG. 9, in transmission mode 3 based on centralized scheduling, when a vehicle requests sidelink resources to an eNB (S901a), the eNB allocates the resources (S902a), and the vehicle transmits a signal in the resources to another vehicle (S903a). In the centralized transmission scheme, resources of another carrier may be also scheduled. In distributed scheduling corresponding to transmission mode 4 illustrated in FIG. 9(b), a vehicle selects transmission resources (S902b), while sensing resources preconfigured by the eNB, that is, a resource pool (S901b), and then transmits a signal in the selected resources to another vehicle (S903b). When the transmission resources are selected, transmission resources for a next packet are also reserved, as illustrated in FIG. 10. In V2X, each MAC PDU is transmitted twice. When resources for an initial transmission are reserved, resources for a retransmission are also reserved with a time gap from the resources for the initial transmission. For details of the resource reservation, see Section 14 of 3GPP TS 36.213 V14.6.0, which is incorporated herein as background art.

### Transmission and Reception of SA

A UE in sidelink transmission mode 1 may transmit a scheduling assignment (SA) (a D2D signal or sidelink control information (SCI)) in resources configured by an eNB. A UE in sidelink transmission mode 2 may be configured with resources for D2D transmission by the eNB, select time and frequency resources from among the configured resources, and transmit an SA in the selected time and frequency resources.

In sidelink transmission mode 1 or 2, an SA period may be defined as illustrated in FIG. 9. Referring to FIG. 9, a first SA period may start in a subframe spaced from a specific system frame by a specific offset, SAOffsetIndicator indicated by higher-layer signaling. Each SA period may include an SA resource pool and a subframe pool for D2D data transmission. The SA resource pool may include the first subframe of the SA period to the last of subframes indicated as carrying an SA by a subframe bitmap, saSubframeBitmap. The resource pool for D2D data transmission may include subframes determined by a time-resource pattern for transmission (T-RPT) (or a time-resource pattern (TRP)) in mode 1. As illustrated, when the number of subframes included in the SA period except for the SA resource pool is larger than the number of T-RPT bits, the T-RPT may be applied repeatedly, and the last applied T-RPT may be truncated to include as many bits as the number of the remaining subframes. A transmitting UE performs transmission at T-RPT positions corresponding to 1s in a T-RPT bitmap, and one MAC PDU is transmitted four times.

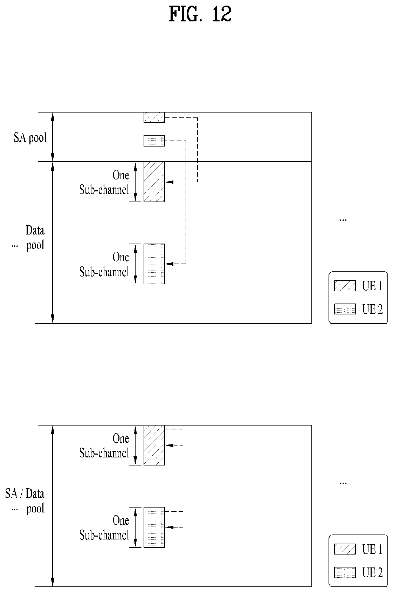

Unlike D2D, an SA (PSCCH) and data (PSSCH) are transmitted in FDM in V2X, that is, sidelink transmission mode 3 or 4. Because latency reduction is a significant factor in V2X in view of the nature of vehicle communication, an SA and data are transmitted in FDM in different frequency resources of the same time resources. Examples of this transmission scheme are illustrated in FIG. 12. An SA and data may not be contiguous to each other as illustrated in FIG. 12(a) or may be contiguous to each other as illustrated in FIG. 12(b). Herein, a basic transmission unit is a subchannel. A subchannel is a resource unit including one or more RBs on the frequency axis in predetermined time resources (e.g., a subframe). The number of RBs included in a subchannel, that is, the size of the subchannel and the starting position of the subchannel on the frequency axis are indicated by higher-layer signaling.

In V2V communication, a cooperative awareness message (CAM) of a periodic message type, a decentralized environmental notification message (DENM) of an event triggered message type, and so on may be transmitted. The CAM may deliver basic vehicle information including dynamic state information about a vehicle, such as a direction and a speed, static data of the vehicle, such as dimensions, an ambient illumination state, details of a path, and so on. The CAM may be 50 bytes to 300 bytes in length. The CAM is broadcast, and its latency should be shorter than 100ms. The DENM may be generated, upon occurrence of an unexpected incident such as breakdown or an accident of a vehicle. The DENM may be shorter than 3000 bytes, and received by all vehicles within a transmission range. The DENM may have a higher priority than the CAM. When it is said that a message has a higher priority, this may mean that from the perspective of one UE, in the case of simultaneous transmission of messages, the higher-priority message is transmitted above all things, or earlier in time than any other of the plurality of messages. From the perspective of multiple UEs, a message having a higher priority may be subjected to less interference than a message having a lower priority, to thereby have a reduced reception error probability. Regarding the CAM, the CAM may have a larger message size when it includes security overhead than when it does not.

### New Radio Access Technology (New RAT or NR)

As more and more communication devices require a larger communication capacity, there is a need for enhanced mobile broadband communication beyond legacy RAT. In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and ultra-reliable and low latency communication (URLLC) is being discussed. In the present disclosure, for simplicity, this technology will be referred to as NR.

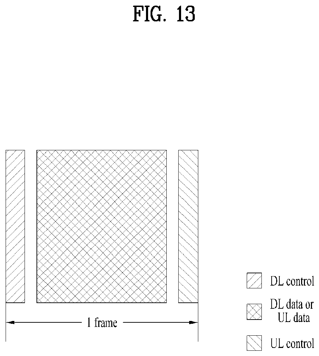

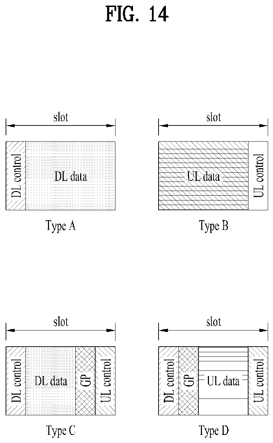

FIGS. 13 and 14 illustrate an exemplary frame structure available for NR. Referring to FIG. 13, the frame structure is characterized by a self-contained structure in which all of a DL control channel, DL or UL data, and a UL control channel are included in one frame. The DL control channel may deliver DL data scheduling information, UL data scheduling information, and so on, and the UL control channel may deliver ACK/NACK information for DL data, CSI (modulation and coding scheme (MCS) information, MIMO transmission-related information, and so on), a scheduling request, and so on. A time gap for DL-to-UL or UL-to-DL switching may be defined between a control region and the data region. A part of a DL control channel, DL data, UL data, and a UL control channel may not be configured in one frame. Further, the sequence of channels in one frame may be changed (e.g., DL control/DL data/UL control/UL data, UL control/UL data/DL control/DL data, or the like).

### Embodiments

In V2V communication, a transmission packet of a UE may have a different size and/or a different periodicity according to a service. For example, a message for platooning and a message for sharing sensor data may differ in their transmission periodicities and sizes.

A description will be given of a method of effectively selecting and reselecting resources in D2D communication, when a message has a different transmission periodicity, size, and latency requirement according to a service or an application. That is, a method of effectively selecting and reselecting resources in D2D communication is proposed, when messages generated by UEs are different in their packet periodicities and sizes in D2D communication.

For D2D communication in which UEs generate packets of different periodicities and sizes, pivot resources may be used, which are repeated periodically irrespective of a change in the size or periodicity of a transmission packet. The pivot resources may be configured from among resources which are reserved periodically by UEs.

When transmitting a packet, a UE may configure resources at a fixed transmission position as pivot resources, despite a variable packet size and transmission periodicity. The pivot resources may be configured as resources indicating the position of resources to be used within a predetermined upcoming time period. Accordingly, the pivot resources may deliver one or more of i) information about the time and/or frequency positions of candidate resources to be used within a predetermined upcoming time period, ii) information about the reservation periodicities of the candidate resources to be used within the predetermined upcoming time period, iii) information about the position or index of resources to be used necessarily within a predetermined time period among the candidate resources, iv) information about the position or index of resources not to be used within a predetermined time period among the candidate resources, v) information about an MCS to be used for candidate resource(s), vi) information about the position or size of resources to be used for data transmission in a next period, vii) information about a reservation periodicity or the position of reserved time and/or frequency resources for next pivot resources, and viii) all or part of transmission data.

The size of the pivot resources may be predetermined. Further, the pivot resources may be extended as needed. That is, the pivot resources may be extended to a predetermined resource area which is contiguous on the time or frequency axis. The extension of the pivot resources may be allowed only when the size of a packet transmitted in the pivot resources is larger than a packet size allowed for transmission in the pivot resources. More specifically, regarding the extension of pivot resources, resources within a predetermined time period/predetermined frequency resources from the pivot resources may be used to transmit a specific packet. For example, when a k^{th} RB of an n^{th} subframe is configured as pivot resources, predetermined frequency resources (e.g., m RBs/subchannels) and/or time resources (e.g., n slots) from the pivot resources may also be used for data transmission. When a transmission resource area is extended from the pivot resources, the transmission resource area may be extended contiguously in the frequency domain and/or the time domain. The frequency-domain contiguous extension may advantageously reduce the influence of inband emission, whereas the time-domain contiguous extension may reduce mutual influence between different transmission techniques in the case of coexistence with another transmission technique (e.g., WiFi).

When such pivot resources are used (by a specific UE), a UE may perform sensing for a predetermined time, select resources for signal transmission based on the result of the sensing, and transmit a signal to another UE in the selected resources. When selecting the resources, the UE may exclude the pivot resources with a highest priority from resources for which the sensing has been performed. As described before, the pivot resources have periodically repeated positions irrespective of a variable size or periodicity of a transmission packet. That is, it is regulated that no other data signal is transmitted in the pivot resources, which is intended to protect the pivot resources because possible occurrence of collision in the pivot resources leads to failure in receiving other data signals.

In the same context, when the pivot resources are extended, the extension may also be protected (like the pivot resources). For this purpose, a specific resource area successive to the pivot resources on the time or frequency axis may be excluded with a second highest priority from the resources for which the sensing has been performed. Needless to say, prioritization is performed between the pivot resources and the extension of the pivot resources. When needed, other resources may have a priority between those of the pivot resources and the extension of the pivot resources. Then, it may be generalized that specific resources have a per-resource priority level, and such a per-resource priority level is different for each resource and each UE. Because the highest priority is assigned to the pivot resources or a highest-priority one of specific resources, the resources are protected against use from other UEs.

The resources which will carry the signal may be selected from among the remaining resources obtained by excluding resources having a sensing result higher than a predetermined threshold from the resources for which the sensing has been performed, and a lowest threshold may be set for the pivot resources. That, when a neighbor UE detects a signal in the pivot resources during a sensing operation, a condition (a reference signal received power (RSRP) or received signal strength indicator (RSSI) threshold) for excluding the pivot resources from transmission resources may be set differently from a condition for excluding data resources from transmission resources. Alternatively, when a resource pool is configured, the position of a pivot resource area may be set separately. In this case, the pivot resources may be periodic. For example, the pivot resource area may be configured with a periodicity of X ms. Alternatively, the pivot resource area may be configured separately from a resource area carrying another signal in the frequency domain.

A V2X control signal may be transmitted in the pivot resources. This control signal may be transmitted semi-statically and periodically. Further, while the control signal is transmitted semi-statically and periodically, a data signal may be transmitted (periodically or aperiodically) with a change (in size) each time. The pivot resources may be used for a semi-static and periodic transmission of a specific UE. When receiving the pivot resources, neighbor UEs may identify an actual data transmission area by decoding a control signal transmitted in the pivot resources, while expecting transmission of the next pivot resources and thus performing a reception in the corresponding resources. Further, since a sensing operation and a semi-static and periodic transmission operation are performed stably between pivot resources, different UEs may stably transmit and receive a control signal to and from each other in spite of the absence of a centralized node such as an eNB

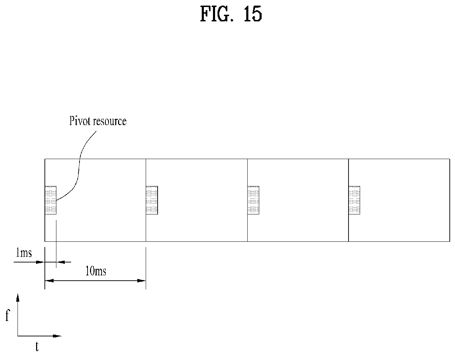

For example, 1-ms pivot resources may be configured every 10ms, as illustrated in FIG. 15. Herein, different TTI lengths may be configured for a pivot resource area and a data resource area. That is, a TTI used in the pivot resource area may be shorter than a TTI used for a UE to transmit data. For example, the TTI of the pivot resource area may be set to 0.25ms, whereas the TTI of the data resource area may be set to 1ms. This is intended to mitigate the half-duplex problem significant in the pivot resource area by shortening the TTI and thus reducing a (continuous) time period during which a UE fails in receiving a signal in the pivot resource area, and extend coverage by transmitting a signal for a long time in the data resource area. The UE which transmits data may transmit a control signal during the 1-ms time period, and indicate the position of an actual data transmission in the next X ms by the pivot resources.

The pivot resources may be determined based on sensing. A UE may receive a signal from another UE in a resource area available for transmission of a pivot signal, and measures the RSRP of this signal and the RSSI of the resource area carrying the signal. When determining that the other UE is using specific resources, the UE may exclude the resources from use. When the pivot resources are determined based on sensing in this manner, the UE may transmit specific information, maintaining the determined resources with a predetermined periodicity. Neighbor UEs may receive a control signal in the pivot resource area and expect transmission of a pivot signal in the next transmission period indicated by the control signal. The control signal transmitted in the pivot resources may indicate the transmission period of next pivot resources or directly indicate data resources in the next transmission period.

In another embodiment, a pivot control signal and a data signal may be multiplexed in frequency division multiplexing (FDM) from the viewpoint of a UE or a system. Even though data is not transmitted, the pivot control signal may be transmitted alone to indicate data which will be transmitted soon. A maximum latency that may be indicated by the control signal may be preset or indicated to UEs by the network so that neighbor UEs may not keep expecting data transmission too long. For example, it may be regulated that a control signal transmitted in a pivot resource area indicates only radio resources within up to 40ms from a time at which the control signal is transmitted.

To efficiently select/reselect resources despite a change in the size or periodicity of a packet, semi-persistent scheduling (SPS) may be deactivated temporarily. Specifically, a UE may reserve a plurality of SPS resources and deactivate unused SPS resource at a specific time among the SPS resources. The transmitting UE may reserve up to N transmission resources based on resource sensing. When the reserved transmission resources are different in one or more of periodicity, frequency resource size, time resource size (the number of OFDM symbols), and time-domain offset (slot/frame offset), the reserved transmission resources may be referred to as different SPS processes. From the viewpoint of the transmitting UE, up to N SPS processes may be configured.

The UE may preconfigure N SPS resources, and signal this resource reservation information to neighbor UEs by physical-layer signaling or higher-layer signaling. Alternatively, the transmitting UE may signal to the neighbor UEs that SPS resources are reserved by transmitting (through) a control signal. For example, an individual control signal may include information about the periodicity of next reserved resources (indicating how many subframes later the resources will be used again).

When multiple SPS resources are configured as described above and the transmitting UE is to use a specific one of the SPS resources, the transmitting UE may reserve the SPS resource by selectively transmitting a control signal. For example, when reserving an SPS resource with a periodicity of 100ms and an SPS resource with a periodicity of 20ms, control signals may be transmitted separately to reserve each of the SPS resources. Alternatively, information about up to N SPS resources may be indicated by a specific control signal. This control information may include information about the position and/or size of frequency resources of each SPS resource and/or information about subframe offsets of the reserved SPS resources from a subframe carrying the control information and/or information about the periodicities of the SPS resources and/or information about an MCS used for each SPS resource and/or information about the ID of the transmitting UE and/or unicast/multicast/broadcast type information and/or scheduling mode information and/or packet priority information and/or latency information. As such, the transmitting UE may transmit information indicating multiple SPS resources every predetermined period. Irrespective of whether SPS resources are actually used, a control signal may always be transmitted every period to signal whether resources of the next resource reservation period are actually used.

It may be regulated that a neighbor UE excludes all of the multiple SPS resources from resources available for transmission unless signaling dictating otherwise is received, or irrespective of a sensing result. That is, the SPS resources are protected by prohibiting other users from using the SPS resources.

When multiple SPS resources are reserved as such, the UE may not use some of the SPS resources, when there is no packet to be transmitted or the size of the current reserved SPS resources is not suitable for a current packet transmission. In this case, a neighbor UE which has excluded the corresponding resources from resource selection, expecting that the UE will continuously use the resources is prohibited from using the resources which are actually not used. Therefore, the resources are wasted. To avert this problem, a control signal may be transmitted, indicating that a specific SPS resource is not used at a specific time. The UE may indicate that a specific SPS resource is not used temporarily in the following methods.

A control signal that cancels reserved resources within a predetermined time period may be transmitted. For this purpose, the control signal may specifically include time offset information indicating the number of subframes after which the reservation is canceled and/or information about reserved frequency resources and/or information about an MCS for the reserved resources and/or information about the ID of the UE that has reserved the resources or the ID of a packet and/or information about an SPS process.

In another method, it may be regulated that once a specific control signal is transmitted, a specific reservation within a predetermined time is canceled. Herein, it may be regulated that instead of all reservations, a reservation satisfying a specific condition is canceled, for example, i) when the size of resources satisfies a predetermined condition, ii) when the resources are specific resources of a specific subframe, or iii) when the reservation is a reservation of a UE having a remaining latency requirement equal to or greater than a predetermined level. For this purpose, the control signal may include condition information for cancellation.

Alternatively, a control signal that schedules specific data may include scheduling information and information for cancellation of N SPS resources (e.g., the positions of the resources or the ID of a UE or a packet). This method advantageously obviates the need for transmitting an additional control signal for cancellation.

Upon receipt of this SPS resource cancellation information, a UE may use the reserved resources indicated by the control information for its transmission, expecting that the reserved resources will not be used. That is, upon receipt of the cancellation information, the UE releases the SPS resources which have been excluded from resource selection from the excluded state. When the resources have been excluded based on a resource selection threshold (e.g., resources exceeding the threshold have been excluded from selection and a low threshold has been set for the SPS resources), the threshold applied to the SPS resources may not be used or a threshold applied to other resources may also be applied to the SPS resources.

When a UE reserves multiple SPS resources, different priority levels may be assigned to SPS processes. For example, for an SPS resource to which a higher priority level is assigned, no cancellation is assumed for the SPS resource or another SPS resource with a lower priority level is taken (by overlap) and used as the higher-priority SPS resource. It may be regulated that when a higher-priority SPS resource overlaps fully or partially with a lower-priority SPS resource, resource selection is performed for the lower-priority SPS resource.

When multiple SPS resources are reserved in a sensing operation, the following resource selection method may be considered.

When a UE reserves resources for N SPS processes, the UE selects individual resources by individual sensing operations. Herein, existing SPS resources in use may be excluded from selectable resources. Particularly, all resources of subframes used for the other SPS processes may be excluded from the selectable resources. This is intended to prevent resource collision, distribute multiple SPS resources, and thus minimize an average latency, when a packet is generated, from the viewpoint of a UE.

The UE may randomly select specific M (<N) SPS processes from among the N SPS processes. Only when the SPS processes have latency requirements below a predetermined threshold or SPS periodicities shorter than a predetermined threshold, the SPS processes may be randomly selected. This is intended to select resources directly for a packet having a strict latency requirement and transmit the packet in the selected resources, without a sensing operation. This SPS processes may have high priority levels, and information about the priority levels may be transmitted in a control signal.

The above description may be used in UL or DL, not limited to direct communication between UEs, and an eNB or a relay node may also use the proposed method.

Since examples of the above proposed methods may be included as one of methods of implementing the present disclosure, it is apparent that the examples may be regarded as proposed methods. Further, the foregoing proposed methods may be implemented independently, or some of the methods may be implemented in combination (or merged). Further, it may be regulated that information indicating whether the proposed methods are applied (or information about the rules of the proposed methods) is indicated to a UE by a pre-defined signal (or a physical-layer or higher-layer signal) by an eNB, or is requested to a receiving UE or a transmitting UE by the transmitting UE or the receiving UE.

### Apparatus Configurations According to Embodiment of the Present Disclosure

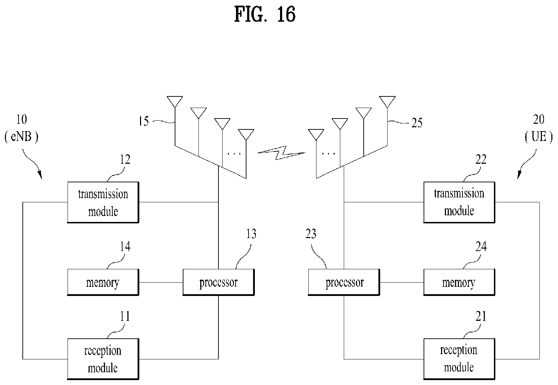

FIG. 16 is a block diagram of a transmission point and a UE according to an embodiment of the present disclosure.

Referring to FIG. 16, a transmission point 10 according to the present disclosure may include a receiving device 11, a transmitting device 12, a processor 13, a memory 14, and a plurality of antennas 15. Use of the plurality of antennas 15 means that the transmission point 10 supports MIMO transmission and reception. The receiving device 11 may receive various UL signals, data, and information from a UE. The transmitting device 12 may transmit various DL signals, data, and information to a UE. The processor 13 may provide overall control to the transmission point 10.

The processor 13 of the transmission point 10 according to an embodiment of the present disclosure may process requirements for each of the foregoing embodiments.

The processor 13 of the transmission point 10 may function to compute and process information received by the transmission point 10 and information to be transmitted to the outside. The memory 14 may store the computed and processed information for a predetermined time, and may be replaced by a component such as a buffer (not shown).

With continued reference to FIG. 16, a UE 20 according to the present disclosure may include a receiving device 21, a transmitting device 22, a processor 23, a memory 24, and a plurality of antennas 15. Use of the plurality of antennas 25 means that the UE 20 supports MIMO transmission and reception. The receiving device 21 may receive various DL signals, data, and information from an eNB. The transmitting device 22 may transmit various UL signals, data, and information to an eNB. The processor 23 may provide overall control to the UE 20.

According to an embodiment of the present disclosure, the processor 23 of the UE 20 may process requirements for each of the afore-described embodiments. Specifically, the processor may perform sensing for a predetermined time, select resources for signal transmission based on a result of the sensing, and transmit a signal in the selected resources to another UE. In the resource selection, the UE excludes pivot resources with priority from resources for which the sensing has been performed, and the pivot resources are located at periodically repeated positions, and are not related to a change in a size or periodicity of a transmission packet.

The processor 23 of the UE 20 may also perform a function of computationally processing information received by the UE 20 and information to be transmitted to the outside, and the memory 24 may store the computationally processed information and the like for a predetermined time and may be replaced by a component such as a buffer (not shown).

The specific configuration of the transmission point and the UE may be implemented such that the details described in the various embodiments of the present disclosure may be applied independently or implemented such that two or more of the embodiments are applied at the same time. For clarity, a redundant description is omitted.

In the example of FIG. 16, the description of the transmission point 10 may also be applied to a relay as a DL transmission entity or a UL reception entity, and the description of the UE 20 may also be applied to a relay as a DL reception entity or a UL transmission entity.

The embodiments of the present disclosure may be implemented through various means, for example, in hardware, firmware, software, or a combination thereof.

In a hardware configuration, the methods according to the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, the methods according to the embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment of the present disclosure or included as a new claim by a subsequent amendment after the application is filed.

### Industrial Applicability

The above-described embodiments of the present disclosure are applicable to various mobile communication systems.

## Claims

1. A method of selecting resources and transmitting a signal in the selected resources by a user equipment (UE) in a wireless communication system, the method comprising:
performing sensing for a predetermined time;
selecting resources for signal transmission based on a result of the sensing; and
transmitting a signal to another UE in the selected resources,
wherein when the UE selects the resources, the UE excludes pivot resources with a highest priority from resources for which the sensing has been performed, and the pivot resources are located at periodically repeated positions, and are not related to a change in a size or periodicity of a transmission packet.

2. The method according to claim 1, wherein a specific resource area contiguous to the pivot resources on a time or frequency axis are excluded with a second highest priority from the resources for which the sensing has been performed.

3. The method according to claim 1, wherein the resources for signal transmission are selected from among the resources for which the sensing has been selected, excluding resources having a sensing result equal to or larger than a predetermined threshold, and a lowest threshold is set for the pivot resources.

4. The method according to claim 1, wherein the pivot resources indicate a position of resources to be used within a predetermined time period.

5. The method according to claim 1, wherein the pivot resources are extended to a specific resource area contiguous to the pivot resources on a time or frequency axis, based on a size of a packet transmitted in the pivot resources being larger than an allowed packet size for transmission in the pivot resources.

6. The method according to claim 1, wherein at least one of the size or periodicity of the packet is changed according to a type of a vehicle-to-everything (V2X) service.

7. The method according to claim 1, wherein a V2X control signal is transmitted in the pivot resources.

8. The method according to claim 1, wherein a transmission time interval (TTI) used in the pivot resource area is shorter than a TTI used for the UE to transmit data.

9. A user equipment (UE) for selecting resources and transmitting a signal in the selected resources in a wireless communication system, the UE comprising:
a transceiver; and
a processor,
wherein the processor is configured to perform sensing for a predetermined time, select resources for signal transmission based on a result of the sensing, and transmit a signal to another UE in the selected resources, and
wherein when the UE selects the resources, the UE excludes pivot resources with a highest priority from resources for which the sensing has been performed, and the pivot resources are located at periodically repeated positions, and are not related to a change in a size or periodicity of a transmission packet.

10. The UE according to claim 9, wherein a specific resource area contiguous to the pivot resources on a time or frequency axis are excluded with a second highest priority from the resources for which the sensing has been performed.

11. The UE according to claim 9, wherein the resources for signal transmission are selected from among the resources for which the sensing has been selected, excluding resources having a sensing result equal to or larger than a predetermined threshold, and a lowest threshold is set for the pivot resources.

12. The UE according to claim 9, wherein the pivot resources indicate a position of resources to be used within a predetermined time period.

13. The UE according to claim 9, wherein the pivot resources are extended to a specific resource area contiguous to the pivot resources on a time or frequency axis, based on a size of a packet transmitted in the pivot resources being larger than an allowed packet size for transmission in the pivot resources.

14. The UE according to claim 9, wherein at least one of the size or periodicity of the packet is changed according to a type of a vehicle-to-everything (V2X) service.

15. The UE according to claim 9, wherein a transmission time interval (TTI) used in the pivot resource area is shorter than a TTI used for the UE to transmit data.
